# EUROPEAN PATENT APPLICATION

(11) **EP 1 228 792 A1**
(43) Date of publication of application: **07.08.2002**
(21) Application number: 01310233.0
(22) Date of filing: 06.12.2001
(51) Int. Cl.: A63F 13/02, A63F 13/12

(54) **Interconnection of users via a communications network, for competitive gaming**

(30) Priority: 06.12.2000 GB 0029734; 07.09.2001 GB 0121712
(71) Applicant: Eludo Limited, London WC2N 6HG (GB)
(72) Inventor: Dunlap, Shayne, c/o Eludo Limited, London WC2N 6HG (GB)
(74) Representative: Slingsby, Philip Roy

(57) **Abstract**

A method of interconnecting a plurality of users via a communications network. Key data is accepted from each user terminal and then validated centrally. The user is allowed to access an online game to compete against other players. The winner from amongst the competing users is awarded a prize. Embodiments include gambling games and multi-user online adventure games.

## Description

### FIELD OF INVENTION

The present invention relates to online gaming for prizes and money, and more specifically, to competitive computer gaming.

The invention has been developed primarily to enable on-line competition in multi-user dungeons (MUDs) or massively multi-player games (MMPGs) for the purposes of entertainment and the potential for prize money, and for on-line gambling games, and will be described hereinafter with reference to these applications. However, it will appreciated that the invention is not limited to use in these fields.

### BACKGROUND TO INVENTION

Over the past few decades, computer gaming has advanced from simple text-based adventures to highly detailed graphical environments within which players can lose themselves. More recently, the rise of cheap and convenient internet access at increasing data rates has seen a substantial increase in multi-player on-line gaming.

Examples of large-scale on-line gaming include Ultima Online (http://www.uo.com/visitor/) and Everquest (a division of Sony - http://www.station.sony.com/everquest), both of which have their roots in "Dungeons and Dragons" style adventure games. Everquest has over 300,000 subscribers at US$119 per year, and the game has peaked at over 60,000 players simultaneously on-line.

One difficulty with on-line gaming has been revenue streams. Despite recent improvements in connection and site security, people are still reluctant to provide credit card or other personal details over the internet. Fears range from the possibility of credit card fraud against them, to a general mistrust of providing information that will be stored on remote servers by third parties.

There is also a very large potential audience without access to or possession of a credit card, perhaps due to age or perceived credit-worthiness.

Also, unless internet users actively seek out such on-line gaming opportunities, there is little opportunity for operators of such services to find new audiences.

It would be desirable to provide an internet gaming service that offers new revenue stream opportunities, provides additional incentives for players to play beyond mere success-based kudos and/or allows alternative marketing opportunities compared to present on-line gaming services.

### SUMMARY OF INVENTION

In a first aspect, the present invention provides a method of interconnecting a plurality of users via a communications network, the method including the steps of:
accepting key data from each user terminal, each of the key data being indicative of purchase of a physical token and being associated with player data;
validating the key data;
allowing each user access to an online game of skill running on a server and playable via the respective user terminals, and accepting gaming inputs associated with the game from the users via the respective user terminals;
providing gaming data to each of the user terminals, the gaming data being based on interaction between:
   gaming software;
   the gaming inputs from the user terminals; and
   the player data associated with the user terminals and their respective associated key data;
   on the basis of the gaming software, determining one or more winners from amongst the users playing the game of skill is a winner; and
   allocating a prize to the winner.

In a second aspect, the present invention provides apparatus for interconnecting a plurality of users via user terminals and a communications network, the apparatus including a gaming server programmed with gaming software defining a game of skill and configured to:
accept key data from each user terminal, each of the key data being indicative of purchase of a physical token and being associated with player data;
validate the key data;
allow each user access to the game of skill via the respective user terminals, and accepting gaming inputs associated with the game from the users via the respective user terminals;
provide gaming data to each of the user terminals, the gaming data being based on interaction between:
   the gaming software;
   the gaming inputs from the user terminals; and
   the player data associated with the user terminals and their respective associated key data;
   on the basis of the gaming software, determine one or more winners from amongst the users playing the game of skill is a winner; and
   allocate a prize to the winner.

Preferably, the player data includes characteristics data, such as one or more of the following:
a player health value;
a number of player lives;
a player strength;
a player identity;
player weaponry;
a time restriction; and/or
one or more intellectual, physical or sociological player characteristics.

In a preferred embodiment, one or more types of characteristics data represent initial values, the initial values being updated as the user plays the game of skill.

Alternatively, or in addition, the player data includes time restriction -data for preventing play after a predetermined date or for a predetermined duration.

Preferably, any initial time period can be extended by successful completion of a predetermined portion of the game, such as a level or assigned task.

In a particularly preferred form, the prize is a cash prize. More preferably, the value of the prize is related to the number of users playing the game, or registered to play the game.

Preferably, the physical token is a storage medium containing the key data.

In a third aspect, the present invention provides a method of enabling user access to interactive gaming on a remote server via a computer terminal and an associated communications link, the method including the steps of:
interfacing a physical token with the computer terminal, the physical token having memory within which key data is stored;
automatically extracting the key data from the memory into the computer terminal and providing the key data to the remote server via the communications link;
validating the key data in the remote server;
enabling access to an interactive game running on the server and playable via the user terminal, and accepting via the computer terminal gaming inputs associated with the game;
providing gaming data to the computer terminal, the gaming data being based on interaction between:
   gaming software running on the server;
   the gaming inputs from the computer terminal; and
   the gaming inputs;
   on the basis of the gaming software, determining a winner of the game; and
   in the event the user of the computer terminal is the winner, allocating a prize.

Preferably in the third aspect, the interactive game is a gambling game.

In a fourth aspect, the present invention provides apparatus for implementing the third aspect of the invention.

### BRIEF DESCRIPTION OF DRAWINGS

A preferred embodiment of the invention will now be described, by way of example only, with reference to the accompanying drawings, in which:

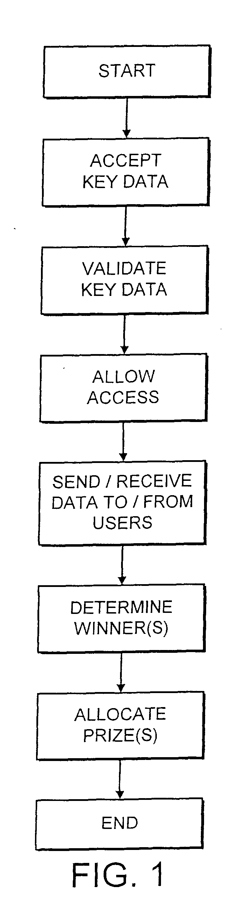

Figure 1 is a flowchart showing the steps involved in a method of interconnecting a plurality of gamers via a communications network, in accordance with the invention; and
Figure 2 is a schematic of a plurality of client computers connected via the internet to an on-line gaming server, configured and programmed to implement the method shown in Figure 1.

### DETAILED DESCRIPTION OF PREFERRED AND OTHER EMBODIMENTS

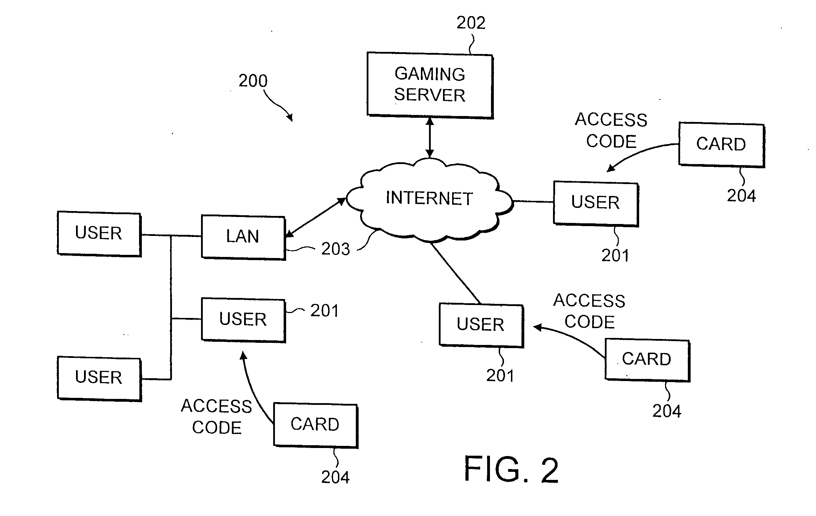

Referring to the drawings, and Figure 2 in particular, there is shown networked computing equipment 200 for interconnecting a plurality of users. Each of the users has access to a terminal 201 through which they can access a gaming server 202.

Each of the terminals 201 includes a processor, memory, local non-volatile memory (such as a hard-drive), a CD-ROM/DVD player, a visual display and input devices such as a keyboard and mouse. The terminal will also usually be running an operating system. The various components of such a terminal are well understood by those skilled in the art and so will not be described in detail. An exemplary terminal is a PC with an Intel Pentium X processor running Microsoft Windows 2000, although other types of active and "dumb" terminals can also be used.

The server 202 can run any suitable hardware or software platform and can also take the form of a logical server distributed over more than one physical machine or location. In practical terms, the server 202 can also include a number of logical servers hosted on one or more physical machines, depending upon the implementation.

The terminals 201 and server 202 are interconnected by a communications network 203, which, in the preferred embodiment, includes an internet portion. It will be appreciated that some or all of the communications network can take the form of a local area network (LAN), wide area network (WAN) or the like and can be any combination of wireless and hard-wired connection.

In use, a user purchases a physical token that has key data associated with it. In the preferred form of the invention, token takes the form of a card 204 having printed upon it an access code. When purchased, the access code is covered by an opaque adhesive film or a layer that can be scratched away with a coin or other edged object. To prevent tampering with, or fraudulent use of, the access code, the card 204 is sold in a sealed bag that is opened by the used prior to revealing the access code.

The access code can either explicitly be the key data itself, or can be associated with actual key data when used to access the server 202, as discussed in more detail below. Also, the access code can take the form of any combination of letters or numbers.

In other embodiments, the key data (or the access code associated with the key data) is stored in non-volatile memory, such as a flash card, smart card, CD-ROM, DVD or the like. In the case of a CD-ROM or DVD being employed, it is particularly preferred that the CD-ROM or DVD be roughly rectangular and about the size of a business card. Alternatively, the token can take other shapes, perhaps related to the specific game for which the token is to be used. For example, if the game is a car racing game, the token can be in the silhouette of a sports car. Usually, graphics indicative of the game for which the token is to be used, and other information such as starting instructions, are printed or otherwise applied to at least one face of the token.

Assuming that the user's terminal is logged on to the internet (whether via phone lines or an intermediate network such as a LAN or WAN) and that suitable browsing software is loaded, the user visits the site at which the game to be played is located, or at least through which it is accessible. The gaming software running on the server requests the user's access code, which is input via the keyboard. For extra security, the user can be given the option of registering the access code, such that an extra password is required to access the site. It will also be appreciated that the token can include auto-start information that automatically takes the user to the correct site. In a preferred embodiment of this version, the auto-start routine encoded on the token also supplied the key data to the server.

Once the key data associated with the user's physical token is verified to ensure it is genuine, characteristics data associated with the physical token are associated with that user. This can be done explicitly, by storing the characteristics data on the gaming server.

The type of characteristics data associated with the key data will depend upon the type of game running on the gaming server, and a number of other subjective factors. For example, if the game is an adventure or role-playing game, the characteristics data can include such values as the player's initial health value, strength, number of player lives, identity, weaponry or the like. This characteristics data can be stored remotely on the gaming server and associated with particular key data, or in an alternative embodiment, can be stored on the card itself in non-volatile memory (such as flash memory, a smart card, or a writable CD-ROM or DVD).

In yet other forms, the characteristics data can be generated when the player joins the game. Again, using the adventure or role-playing game example, when the player first logs on, selections of certain characteristics can be made (eg, character class, name, etc) whilst other characteristics can be automatically generated in accordance with predetermined rules. Often, this will be with reference to some form of random or pseudo-random data generator.

The means for generating the characteristics data can also be stored on the physical token in the form of computer software.

For example, if the physical token is a CD-ROM or DVD disk, a relatively small program containing an interface for character generation or modification can be provided. So, if the physical token purchased is of a "Sorcerer" character class, then the particular characteristics of the character, including name and skills, can be modified by way of the interface software on the CD-ROM or DVD.

The resultant character, whether entirely pre-generated, generated by the user from scratch, or some combination of the two, can be stored in any number of ways. For example, the gaming server can store a copy of the character data. This is particularly convenient because the user can then access the data from any terminal. Other alternatives include storing the characteristics data locally on the user's terminal or in non-volatile memory on the physical token. Each of these different means for storing the characteristics data has advantages and disadvantages that will be apparent to those skilled in the art.

Once the user's character is generated, the game running on the gaming server can be accessed. The particular type of game will vary from embodiment to embodiment. For example, in the case of the adventure or role-playing game, the user might have to wait until a new level is reached by other players in a particular game. Typically in such cases, multiple games will be in progress at any one time, so the user shouldn't need to wait long. Also, there may be restrictions on the games themselves, to prevent players whose characters are, for example, too experienced or powerful from gaining an unfair competitive advantage over other players.

One way of encouraging players to attempt higher and harder levels is to bias allocation of points. In this way, it can be made impossible, difficult or at least relatively expensive for a player to win without attempting more challenging levels or games.

Once in the game, the players interact with each other and game features in any of the usual ways such games are played. This will involve the players inputting data indicative of their choices, conversing with other players, and otherwise interacting with the gaming software running on the gaming server, and with the actions of other users participating in the game.

The game is, however, competitive, and the aim of the game is to win based on some predetermined criterion. For example, points may be allocated for successful fighting, completion of set tasks, acquisition of certain items, or adhering to certain behaviour types, such as class-related behaviours.

Once the predetermined circumstances arise, one or more winners are determined based on performance within the game. The appropriate time at which to determine the winners can be, for example, after a predetermined period of play, after a predetermined score has been reached by one or more of the players or once a gaming target (such as a quest finishing) has been achieved. As noted above, in the preferred form there is a points bias towards higher levels and more difficult tasks, designed to make it more difficult to a player to win without taking on higher levels.

The winner or winners are allocated prizes in accordance with the rules of the game. The prizes can range from cash, to products or services, through to prizes related to the game itself, such as merchandising or additional time/lives or characteristics for the winner's character.

A number of variations exist. For example, the game itself can be of any genre in which competition is possible. It will be appreciated that this simply means there is some quantifiable measure of each player's performance, such that one or more winners can be ascertained at the end of (or at some predetermined time within) each game. Example of games that the present invention can be applied to include, but are not limited to, solo and team based sports games, strategy games, simulators of all types, action games or puzzles.

It will also be appreciated that different levels and types of physical tokens can be purchased by users. For example, a more expensive type of card may offer a user a more powerful character, or more time, depending upon the type of game being played. In such a case (and in the spirit of fair gaming) the player will enter the game with players of at least approximately equivalent character attributes and power. This occurs Irrespective of those other players having successfully played to have achieved such a level or having purchased a similar "superior" card.

Also, in some embodiments, users have the option of using a card to access or augment an existing character they have created. This can be in terms of time, capabilities, lives, health, or any other characteristic of a character that can be modified or improved.

In a similar vein, in one embodiment, players can re-enter a game after all of their lives or health have been used up by purchasing another token and re-registering with the same game within a set time period. The time period can be varied depending upon the intended duration the particular level or game, and can be anything from a few hours to many days or even weeks in duration. The preferred duration is 72 hours, since it is believed this provides a good compromise between encouraging users to go out and buy another card whilst the game is still fresh and exciting in their minds, without placing the user under unduly heavy time restraints for doing so.

Where such re-entry into a game is allowed, it is preferred that the player re-enters with some loss of status, whether it be a skills- or characteristics-based loss. The player still keeps the original character and is able to continue whatever game or level was being played, without needing to retrace steps within the game or level, which can prove tedious.

In yet other embodiments, the physical tokens take the form of cards that have secondary points values and other data associated with them. Preferably, the points and data themselves define a card-based game playable amongst a number of players. So-called fantasy games are most amenable to this treatment, but it will be understood that other types of games are also playable in this way.

It will be understood by those skilled in the art that, as the broadband internet access becomes more widespread, it becomes feasible for virtually all gaming data to be provided to each of the terminals by the gaming server. However, some of the software required can be provided to the user at the time the physical token is purchased. This software can either be provided on a separate data storage device, such as a CD-ROM, DVD or the like, or can be provided on the physical token itself.

In some cases it is desirable to operate the game in conjunction with computerised 3D models of players. For example, a player can choose an avatar representing his character, that can be used in online chats or gaming encounters with others. In this way, discussions, taunts, victory slogans and the like can be delivered to another player's computer terminal, enabling a more vivid interactive experience to be provided. In one particularly preferred embodiment, the 3D representation includes a texture incorporating the user's selection of actual photograph or other image, mapped into a rough 3D model of, say, a human head. In this way, the avatar can actually be configured to have the player's appearance. The mapping of the two-dimensional texture onto a 3D head enables the average user to produce this effect easily, whilst reducing bandwidth requirements compared to providing an accurate 3D model.

In an alternative preferred embodiment, the invention is configured to enable user access to interactive gaming on a remote server via a computer terminal. In this case, a physical token is interfaced with the computer terminal. By "interfaced", it is meant that the physical token interacts with the computer terminal. In the preferred version of this embodiment, the physical token is a CD-ROM or DVD-ROM, and is interfaced with the computer terminal by being inserted into a suitable CD-ROM or DVD ROM drive.

Once the physical token is interfaced with the computer terminal, key data stored in memory on the physical token is extracted into the computer terminal. This can be achieved by way of, for example, the auto-start functionality of Microsoft Windows 95/98/2000, which by default causes any CD-ROM placed into the CD-ROM drive to automatically read and execute certain commands on the CD-ROM. Auto-start functionality is well known to those skilled in the relevant art, and so will not be described in detail here.

The computer terminal provides the key data to the remote server via the communications link. As with other embodiments, this other link will usually be the internet, although it could be a LAN or WAN. If the computer terminal is configured to use a dial-up connection, this can either be attempted automatically, or information on the CD-ROM or DVD-ROM can cause the key data to be sent automatically once the user establishes a dial-up connection.

Once the remote server receives the key data, it is validated. As with validation in other embodiments, validation is a broad concept and can range from checking a simple checksum through to ascertaining allowable dates and times.

At this stage, a registration step is preferably required before the user is given access to an interactive game on the server. In this step, the user is asked to enter certain personal information. This information can be as simple as an on-line alias, but could include collecting marketing data such demographic information, account details to allow crediting and debiting of funds upon winning or losing the interactive game, or any other data that the provider of the card might be interested in. There is, of course, a balance to be had between automatically allowing validation (with no requirement for further information) and requesting information from the user. However, this balance will be different depending upon the game to be played, average user expectations, the value being offered on the card, and other factors that will be appreciated by those skilled in the art.

In the event that validation is successful, the user is granted access to an interactive game running on the remote server. Whilst the game can be of any type, it is particularly desirable in this embodiment that the game be a gambling game. The gambling game can be played against an artificial opponent (the computer) or multiple people can play against each other and/or the computer. Gambling games are known and so are not described herein in detail.

In the preferred embodiment, the token will have associated with it a number of credits, which usually represent currency. Upon validation, the credits are attributed to the user. The amount of credits on the account generated at valuation can increase or decrease as the player wins or loses the online games being played, as described below.

In general, the game running on the server will accept inputs from the user via the computer terminal. For example, in a card game, the server will receive the user's selection as to which cards are to be kept or discarded. The server may also be configured to accept betting inputs from the user.

The server supplies to the computer terminal information enabling the terminal to generate a display with which the user can interact. To reduce bandwidth requirements, this data can be supplied in a summary format that is interpreted and expanded by a program running on the computer terminal. For example, the physical token can include an executable program that understands a data format sent by the server. In, say, a black jack game, the server need only send information such as stake information, cards dealt, and other administrative information such as the betting round and winnings and losings as the game proceeds. This information is extrapolated into a visual display of a blackjack table with the correct cards on it. Animations such as an interactive dealer can help make the game more enjoyable for players.

In the event that the user playing the game wins a hand/round/game, a payout is made. This can be in the form of redeemable points, or credit can be applied to the user's credit card or directly into a bank account. Conversely, if the player loses, point or credit can be deducted. In many embodiments involving gambling, it will be desirable to have acquired the player's credit card details and consent to debit funds from that account in the event the player loses the game (or loses often enough or with a big enough stake that any originally provided credits have been used up).

In all of the embodiments above, it will be appreciated that any interactive media which allows the requisite level of access and interaction can be used to implement the invention. For example, although the embodiments refer to the use of a personal computer, that computer (or processor) may in fact be embedded in another device, such as an interactive digital television, a personal digital assistant (PDA) or any other suitable interactive device.

The present invention offers a novel way of interconnecting a plurality of users via a communications network, for the purposes of competitive gaming for prizes. Unlike many prior gaming arrangements, it is not necessary for users to have access to a credit card to participate, and for this reason the present invention represents a commercially significant advance.

Although the invention has been described with reference to a number of specific preferred embodiments, it will be appreciated by those skilled in the art that the invention can be embodied in many other forms.

## Claims

1. A method of interconnecting a plurality of users via a communications network, the method including the steps of:
accepting key data from each user terminal, each of the key data being indicative of purchase of a physical token and being associated with player data;
validating the key data;
allowing each user access to an online game of skill running on a server and playable via the respective user terminals, and accepting gaming inputs associated with the game from the users via the respective user terminals;
providing gaming data to each of the user terminals, the gaming data being based on interaction between:
gaming software;
the gaming inputs from the user terminals; and
the player data associated with the user terminals and their respective associated key data;
on the basis of the gaming software, determining one or more winners from amongst the users playing the game of skill is a winner; and
allocating a prize to the winner.

2. A method according to claim 1, wherein the player data includes characteristics data.

3. A method according to claim 2, wherein the characteristics data includes one or more of the following:
a player health value;
a number of player lives;
a player strength;
a player identity;
player weaponry;
a time restriction; and/or
one or more intellectual, physical or sociological player characteristics.

4. A method according to claim 3, wherein one or more types of characteristics data represent initial values, the initial values being updated as the user plays the game of skill.

5. A method according to claim 3 or 4, wherein the user's access to the game of skill via the key data is controlled by reference to one or more of the types of characteristics data.

6. A method according to claim 1, wherein the player data includes a time restriction.

7. A method according to claim 6, wherein the time restriction includes a predetermined time, beyond which the key data is not valid for attempts to access the game.

8. A method according to claim 6 or 7 wherein the time restriction includes a predetermined initial time period, the key data not being valid for attempts to access the game once the player has accessed the game for the initial time period.

9. A method according to claim 8, wherein the initial time period can be extended by successful completion of a predetermined portion of the game.

10. A method according to claim 9, wherein the predetermined portion of the game includes a level or assigned task.

11. A method according to claim 9 or 10, wherein successful completion of the predetermined portion of the game includes acquiring a predetermined score.

12. A method according to claim 9 or 10, wherein successful completion of the predetermined portion of the game includes attainment of a predetermined value of one or more of the following:
the player health value;
the number of player lives;
the player strength;
the player identity;
the player weaponry; and/or
one or more of the intellectual, physical or sociological player characteristics.

13. A method according to any one of the preceding claims, wherein the prize is a cash prize.

14. A method according to any one of the preceding claims, wherein the value of the prize is related to the number of users playing the game.

15. A method according to any one of the preceding claims, wherein the physical token is a storage medium containing the key data.

16. A method according to claim 15, wherein the storage medium is an optical, magneto-optical or solid state storage medium.

17. Apparatus for interconnecting a plurality of users via user terminals and a communications network, the apparatus including a gaming server programmed with gaming software defining a game of skill and configured to:
accept key data from each user terminal, each of the key data being indicative of purchase of a physical token and being associated with player data;
validate the key data;
allow each user access to the game of skill via the respective user terminals, and accepting gaming inputs associated with the game from the users via the respective user terminals;
provide gaming data to each of the user terminals, the gaming data being based on interaction between:
the gaming software;
the gaming inputs from the user terminals; and
the player data associated with the user terminals and their respective associated key data;
on the basis of the gaming software, determine one or more winners from amongst the users playing the game of skill is a winner; and
allocate a prize to the winner.

18. Apparatus according to claim 17, wherein the player data includes characteristics data.

19. Apparatus according to claim 18, wherein the characteristics data includes one or more of the following:
a player health value;
a number of player lives;
a player strength;
a player identity;
player weaponry;
a time restriction; and/or
one or more intellectual, physical or sociological player characteristics.

20. Apparatus according to claim 19, wherein one or more types of characteristics data represent initial values, the gaming server being configured to update the initial values as the users play the game of skill.

21. Apparatus according to claim 19 or 20, wherein the gaming server controls the users' access to the game of skill via the key data with reference to one or more of the types of characteristics data.

22. Apparatus according to claim 17, wherein the player data includes a time restriction.

23. Apparatus to claim 20, wherein the time restriction includes a predetermined time, beyond which the key data is not valid for attempts to access the game.

24. Apparatus according to claim 22 or 23 wherein the time restriction includes a predetermined initial time period, the key data not being valid for attempts to access the game once the player has accessed the game for the initial time period.

25. Apparatus according to claim 24, wherein the initial time period can be extended by successful completion of a predetermined portion of the game.

26. Apparatus according to claim 25, wherein the predetermined portion of the game includes a level or assigned task.

27. Apparatus according to claim 25 or 26, wherein successful completion of the predetermined portion of the game includes acquiring a predetermined score.

28. Apparatus according to claim 25 or 26, wherein successful completion of the predetermined portion of the game includes attainment of a predetermined value of one or more of the following:
the player health value;
the number of player lives;
the player strength;
the player identity;
the player weaponry; and/or
one or more of the intellectual, physical or sociological player characteristics.

29. Apparatus according to any one of the preceding claims, wherein the prize is a cash prize.

30. Apparatus according to any one of the preceding claims, wherein the value of the prize is related to the number of users playing the game.

31. Apparatus according to any one of the preceding claims, wherein the physical token is a storage medium containing the key data.

32. Apparatus according to claim 31, wherein the storage medium is an optical, magneto-optical or solid state storage medium.

33. A method of enabling user access to interactive gaming on a remote server via a computer terminal and an associated communications link, the method including the steps of:
interfacing a physical token with the computer terminal, the physical token having memory within which key data is stored;
automatically extracting the key data from the memory into the computer terminal and providing the key data to the remote server via the communications link;
validating the key data in the remote server;
enabling access to an interactive game running on the server and playable via the user terminal, and accepting via the computer terminal gaming inputs associated with the game;
providing gaming data to the computer terminal, the gaming data being based on interaction between:
gaming software running on the server;
the gaming inputs from the computer terminal; and
the gaming inputs;
on the basis of the gaming software, determining a winner of the game; and
in the event the user of the computer terminal is the winner, allocating a prize.

34. A method according to claim 33, wherein the interactive game is a gambling game.

35. A method according to claim 33 or 34, wherein the interactive game can be played by a plurality of users via a corresponding plurality of computer terminals.

36. A method according to claim 35, wherein the gaming data sent to each of the computer terminals is customised for the user of that computer terminal.

37. A method according to any one of claims 33 to 36, wherein the memory also includes quantitative value data indicative of a value of the card.

38. A method according to claim 37, wherein the quantitative value data is reduced in the event that a user loses the game.

39. A method according to claim 38, wherein the quantitative value data is increased in the event that a user wins the game.

40. A method according to claim 38 or 39, wherein the quantitative value data is stored on the server, and not amended in the memory of the physical token.

41. A method according to any one of claim 37 to 40, wherein the access to playing the game on the server is limited on a time basis.

42. A method according to claim 41, wherein the time is a preset period commencing from the first time the key data is validated in the server.

43. A method according to claim 41, wherein the time is a predetermined date.

44. A method according to any one of claims 41 to 43, wherein the quantitative value data incorporates the time data.

45. A method according to claim 44, wherein the prize includes an option to extend the original time during which the key data allows access to the game on the server.

46. A method according to any one of claims 37 to 40, wherein the access to playing the game on the server is limited on a credit basis.

47. A method according to claim 46, wherein the token bears an initial credit value that is attributed to the user upon validation

48. A method according to claim 46, wherein the access to playing the game is prevented once the credits reach a predetermined upper or lower level.

49. A method according to any one of claims 46 to 48, wherein the quantitative value data incorporates the credit data.

50. A method according to claim 34, wherein the prize includes an option to increase the number of credits.

51. A method according to claim 41, wherein the game is won upon completing a predetermined portion of the game or acquiring a predetermined score.

52. A method according to any one of claims 33 to 51, wherein the prize is a cash prize.

53. A method according to any one of claims 33 to 52, wherein a value of the prize is related to the number of users playing the game.

54. A method according to claim 33, wherein the physical token is a storage medium containing the key data.

55. A method according to claim 54, wherein the storage medium is an optical, magneto-optical or solid state storage medium.

56. Apparatus for enabling user access to interactive gaming on a remote server via a computer terminal and an associated communications link, in accordance with the method of claim 33.
